# EUROPEAN PATENT SPECIFICATION

(11) **EP 2 501 192 B1**
(45) Date of publication and mention of the grant of the patent: **24.12.2014**
(21) Application number: 11290105.3
(22) Date of filing: 28.02.2011
(51) Int. Cl.: H04W 72/04, H04W 16/28

(54) **Method of assigning radio resources to mobile terminals based on the relative distance between said mobile terminals and a base station**
Verfahren zum Zuteilen von Funkressourcen an Mobilstationen auf der Basis der relativen Distanz zwischen diesen Mobilstationen und einer Basisstation
Procédé d'attribution des ressources radio pour les terminaux mobiles sur la base de la distance relative entre lesdits terminaux mobiles et une station de base

(43) Date of publication of application: 19.09.2012
(73) Proprietor: ALCATEL LUCENT, 92100 Boulogne-Billancourt (FR)
(72) Inventor: Halbauer, Hardy, 76275 Ettlingen (DE); Saur, Stephan, 70567 Stuttgart (DE)
(74) Representative: Wetzel, Emmanuelle

(56) References cited:
- EP-A1- 2 111 065
- WO-A2-02/33998
- US-A1- 2004 229 651
- US-A1- 2007 159 993
- US-A1- 2010 159 930

## Description

### Field of the Invention

The invention relates to a method of operating a base station for a cellular communications network. The invention further relates to a base station for a cellular communications network.

### Background

Conventional base stations for cellular communications networks comprise antenna systems having one or more antennas which are mounted and adjusted during an installation of the base station in the field.

Particularly, a tilt angle between a main beam direction of the antenna's characteristic beam pattern and a horizontal plane is manually adjusted by service technicians during the installation. After the installation, the tilt angle remains fixed, or it is adjusted electronically in a long-term scale, e.g. adapting to the traffic load during a day. However, this conventional installation generally applies the same tilt angle to all terminals in the cell.

There is a need to provide a more sophisticated base station and method of operating a base station which offer increased flexibility regarding the operational characteristics of the base station.

US 2004/0229651 Al discloses an antenna arrangement, and a method associated with such arrangement, including at least two antennas for providing radio coverage to a plurality of user equipment in a predetermined area of a mobile communications network.

US 2007/0159993 Al discloses a base station that includes a scheduler to determine a location of a user terminal within a cell of a wireless system.

### Summary

According to the present invention, regarding the above mentioned method of operating a base station, this object is achieved by: a method according to claim 1.

The vertical angle can be interpreted as an optimum downtilt or tilt angle which, when implemented by the base station, leads to optimum transmission conditions with respect to a specific terminal because a main lobe of a beam pattern of the base station's antenna would then be directed at said specific terminal. By assigning the second radio resource to said at least two terminals depending on a parameter which characterizes said vertical angle, a particularly efficient reduction of interference between neighboring cells may be achieved.

According to an embodiment, the vertical angle may e.g. correspond with a direction of the most distinctive propagation path (i.e., the path which offers a maximum received signal power) between the base station and the terminal. It is to be noted that, especially due to the effect of multipath propagation, a direction between the base station and the terminal as characterized by the vertical angle may differ from an angle that corresponds with a "direct line of sight" - type direction, because, due to reflections and other effects associated with multipath propagation, the "direct line of sight" - type direction may not necessarily be associated with the most distinctive propagation path (i.e., the path which offers a maximum received signal power).

Advantageously, the method according to the embodiments does not require assessing feedback information or transmission quality information. Further, the method according to the embodiments does not require any interbase station communication, e.g. between neighbouring base stations.

According to a preferred embodiment, said base station comprises an antenna a tilt angle of which can be controlled, wherein said base station uses individual tilt angles for single terminals and/or groups of terminals depending on said parameter which characterizes said vertical angle. Thus, individual terminals may optimally be served by the base station by adapting its antenna beam pattern to the respective terminals. However, if the antenna system is capable of implementing only comparatively few different values of the tilt angle, the terminals under consideration by the base station (i.e. those terminals which are scheduled for the same primary radio resource) are grouped into various terminal groups according to their respective vertical angles. I.e., several terminals having similar vertical angles may be put into one terminal group which is associated with one of the discrete tilt angles that may be used by the base station.

According to a particularly preferred embodiment, said primary radio resource is time, preferably transmission time slots. For instance, cellular communications networks according to the LTE standard provide using transmission time slots and frequency subchannels as primary and secondary radio resources. However, the present embodiments are not limited to this particular combination of radio resources. For instance, besides allocating frequency resources (such as e.g. frequency subchannels) to users/terminals that are served during the same time slot as described above, the principle according to the embodiments can generally also be applied by allocating different time resources (i.e., time slots) to users/terminals that are served on the same frequency resource (i.e., in this case, frequency is considered as the primary radio resource).

Apart from time and frequency, preferably orthogonal, codes may also be considered as radio resource in the sense of the present invention. Thus, a first radio resource may be frequency, and a second radio resource may be a specific code, and the like. In this case, the radio resource "code" is assigned to the various terminals served on the same frequency resources depending on the vertical angle.

According to the invention, said base station assigns a first number of, preferably adjacent, frequency subchannels to a first one of said at least two terminals, and said base station assigns a second number of, preferably adjacent, frequency subchannels to a second one of said at least two terminals. Within LTE systems, for example, resource blocks (RB) may be used to represent said frequency subchannels according to the present embodiments. The first and/or second number of frequency subchannels, are not necessarily adjacent to each other. Other types of assignment, i.e. comprising non-adjacent subchannels, are also possible.

According to a further preferred embodiment, said base station sorts said at least two terminals depending on said parameter which characterizes said vertical angle associated with said terminals to obtain a sorted list of terminals, and said base station assigns said portions of said secondary radio resource depending on said sorted list of terminals, which represents a particularly efficient assignment technique.

Generally, said parameter which characterizes said vertical angle may e.g. be estimated and/or approximated, e.g. by determining a relative distance between the base station and the specific terminal (using signal strength measurements, delay measurements, and the like). Destination of arrival estimation techniques may also be employed.

According to a further preferred embodiment, said step of assigning said secondary radio resource is performed according to a predetermined scheme, particularly independent of feedback information that characterizes an actual quality of transmission between the base station and individual terminals. Thus, the embodiments represent a very simple, decentralized measure to distribute secondary radio resources to different terminals in the sense of decreasing an overall interference between neighbouring cells. It is particularly advantageous, if neighboring base stations employ different variants of the scheme according to the embodiments so as e.g. not to assign the same secondary radio resources (e.g., frequency bands) to those of their terminals which are in a cell border region, i.e. close to the neighboring base station. This may e.g. be ensured when deploying the base stations by providing different "start values" to the inventive radio resource assignment scheme such that neighboring base stations do not employ identical variants of the scheme.

According to a further preferred embodiment, said predetermined scheme associates values and/or value ranges of said parameter which characterizes a vertical angle with respective portions of said secondary radio resources.

Generally, an adjustment of the tilt angle may be performed in different ways. Firstly, if the base station's antenna is a phase-controlled antenna the beam pattern of which can be dynamically controlled by altering a phase of at least one signal supplied to an antenna element of said antenna (which is usually done by a corresponding antenna controller), an adjustment of the tilt angle may possibly be achieved by correspondingly controlling the beam pattern. I.e., the antenna may be electrically controlled so as to alter the tilt angle between an axis of a main lobe of said beam pattern and a horizontal plane.

Secondly, if the base station's antenna is not a phase-controlled antenna but rather a conventional antenna without the possibility of electrically controlling the beam pattern, and especially the tilt angle of the main lobe axis, a tilt angle adjustment in the sense of the embodiments may be accomplished by mechanical driving means which rotate the antenna around a predetermined axis such as e.g. an axis in the horizontal plane which extends substantially perpendicularly to the direction of propagation defined by the main lobe of the beam pattern.

Third, antennas with a limited number of adjustable downtilts, realized by different feeder networks within the antenna for the antenna elements, and selection of the appropriate one by mechanically or electronically switching between the available feeder networks, may also be employed for tilt angle adjustment according to an embodiment.

Of course, a combination of the aforementioned methods may also be employed for tilt angle adjustment.

A further solution to the object of the present invention is given by a base station according to claim 7. Further advantageous embodiments of the invention are given in the dependent claims.

### Brief Description of the Figures

Further features, aspects and advantages of the present invention are given in the following detailed description with reference to the drawings in which:
- Figure 1: depicts a simplified block diagram of a communications scenario according to an embodiment,
- Figure 2: depicts a simplified block diagram of a base station according to an embodiment,
- Figure 3: schematically depicts frequency subchannels as employed by a method according to the embodiments,
- Figure 4: depicts a simplified flow chart of a method according to the embodiments, and
- Figure 5a, 5b, 5c: depict different resource assignment schemes according to an embodiment.

### Description of the Embodiments

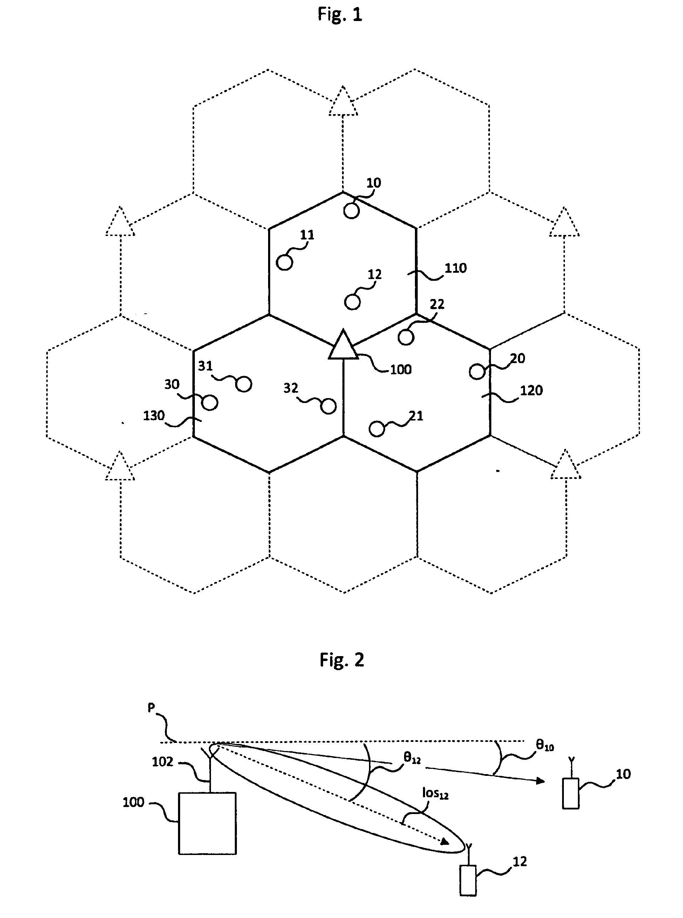

Figure 1 depicts a simplified block diagram of a communications scenario according to an embodiment.

A base station 100 of a cellular communications network is depicted. The base station 100 may serve a number of terminals 10, 11, 12 by providing radio coverage in form of a radio cell 110 in a per se known manner. For instance, the base station 100 may operate according to at least one of the following standards: GSM (Global System for Mobile Communications), UMTS (Universal Mobile Telecommunications System), LTE (Long Term Evolution), WiMax (Worldwide Interoperability for Microwave Access), WLAN (Wireless Local Area Network). For the further exemplary explanations, it is assumed that the base station 100 is an LTE-compatible base station.

Further neighbouring radio cells 120, 130 of the communications network are also depicted by Fig- 1 which may correspondingly be served by further base stations that are not depicted in Fig. 1 for the sake of clarity. However, the further base stations which provide the further neighbouring radio cells 120, 130 may be co-located with the first base station 100.

Generally, even further base stations and their associated cells may also be provided within the network. Those further devices and cells are only indicated by dashed lines within Fig. 1 and form a generally hexagonal cell pattern for the communications network together with the cells 110, 120, 130.

As can be gathered from Fig. 2, the base station 100 comprises an antenna 102, a characteristic beam pattern of which is symbolized by the elliptical shape presently directed to the terminal 12. I.e., the main lobe of the beam pattern is currently aligned with the direction los₁₂ of the most distinctive propagation path (i.e., the path which offers a maximum received signal power) between the base station 100 and the terminal 12. An associated vertical angle θ₁₂ between a virtual horizontal plane P associated with said base station 100 and said terminal 12, is obtained. Obviously, the vertical angle θ₁₂ depends, inter alia, on a distance between base station 100 and terminal 12. Moreover, a vertical position of the terminal 12, of course, may also influence the vertical angle θ₁₂.

Generally, the direction los₁₂ associated with the vertical angle θ₁₂ does not necessarily represent a direction of a "line of sight" between the devices 100, 12, because due to effects such as multipath propagation, the most distinctive propagation path (i.e., the path which offers a maximum received signal power) between the base station 100 and the terminal 12 may require a vertical angle θ₁₂ different from a direction of the "line of sight" between the devices 100, 12. Presently, for illustration and simplification purposes, however, Figure 2 depicts a situation where the vertical angle θ₁₂ and a direction of the "line of sight" between base station 100 and terminal 12 are roughly equal to each other.

For instance, the further terminal 10, which is presently further away from the base station 100 (also cf. Fig. 1), correspondingly has another associated vertical angle θ₁₀ < θ ₁₂.

Generally, the vertical angle θ₁₂ associated with a terminal 12 corresponds with an optimum downtilt angle for the antenna 102. I.e., if the base station 100 controls its antenna pattern to assume the respective vertical angle θ₁₂ as downtilt angle, optimum communications conditions for communications with the specific terminal 12 are ensured.

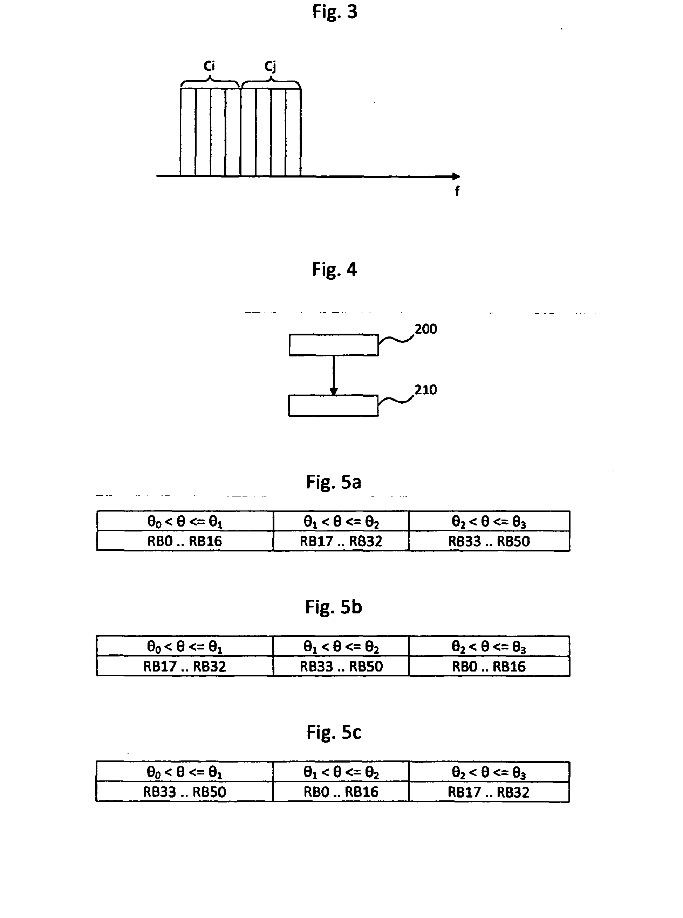

According to a preferred embodiment, the base station 100 is configured to determine 200 (cf. the flow chart of Fig. 4) at least two terminals 10, 11, 12 which are served by the base station 100 and which are scheduled for the same primary radio resource, and to assign 210 (Fig. 4) individual portions of a secondary radio resource, which is different from said primary radio resource, to said at least two terminals 10, 11, 12 depending on a parameter which characterizes said vertical angle θ₁₂,.. of the respective terminal 10, 11, 12.

In the exemplary context of an LTE system, the primary radio resource is time, preferably transmission time slots according to LTE standard, and said secondary radio resource is frequency, preferably frequency subchannels according to LTE standard.

I.e., in the first step 200 (Fig. 4), the base station determines, which terminals 10, 11, 12 (Fig. 1) are scheduled for e.g. the same transmission time slot (="primary radio resource"). Then, in the second step 210 (Fig. 4), the base station assigns individual portions of a secondary radio resource, i.e. frequency subchannels, to said terminals 10, 11, 12 depending on a specific vertical angle θ₁₂, .. of the terminals.

For instance, in step 200, the base station 100 determines that the two terminals 10, 11 are scheduled for a same transmission time slot. Thus, the assignment of the secondary radio resource, i.e. frequency subchannels, is performed as follows:

The base station 100 determines, which of the terminals 10, 11 has the smallest vertical angle. Presently, terminal 10 has the smallest vertical angle θ₁₀, since it is at a border of the radio cell 110 (Fig. 1). Thus, the further terminal 11 is determined to have a larger vertical angle.

Depending on this sequence of the terminals 10, 11 regarding their vertical angles, the base station 100 assigns frequency subchannels to the terminals for a future data communications which is performed on the same primary radio resource, i.e., transmission time slot. For instance, a first group Ci of frequency subchannels, cf. Fig. 3, is assigned to the terminal 10, and a second group Cj of frequency subchannels, cf. Fig. 3, is assigned to the terminal 11. of course, the number of frequency subchannels within the respective group Ci, Cj is not necessarily the same as in the other groups assigned to other terminals. As per se known, the number of assigned frequency subchannels may actually depend on a desired data rate and the like.

The above explained resource assignment depending on the vertical angle of the terminals 10, 11 is particularly efficient and requires no coordination of the base station 100 with neighbour base stations in order decrease interference.

Moreover, according to the present embodiment, the base station 100 is not required to alter its tilt angle at all. It may rather "only" perform the inventive assignment of the secondary radio resource depending on the vertical angle that results from the relative position between base station and the terminals, i.e. without providing individual tilt angles for the respective terminals.

However, according to a further advantageous embodiment, the base station 100 may also adapt its tilt angle, preferably on a per-terminal basis. With this embodiment, in addition to the above explained assignment of subchannels according to Fig. 3, the base station 100 additionally provides specific tilt angles for the transmissions with the terminals 10, 11, wherein the tilt angles are chosen to be identical or close to the actual vertical angles resulting from the positions of the terminals.

According to an embodiment, said base station 100 is configured to use individual tilt angles for single terminals 10, 11, 12. This can e.g. be done, if the base station comprises an electric tilt angle control which allows to control the tilt angle within a wide range of tilt angle values.

However, if the base station 100 can only provide for comparatively few different tilt angles, groups of terminals which have similar vertical angles may be served with the same tilt angle.

According to an embodiment, said base station 100 is configured to sort said at least two terminals 10, 11, 12 depending on said parameter which characterizes said vertical angle θ₁₂, .. associated with said terminals 10, 11, 12 to obtain a sorted list of terminals 10, 11, 12, and to assign said portions of said secondary radio resource depending on said sorted list of terminals 10, 11, 12. I.e., each terminal 10, 11, 12 is sorted according to its associated vertical angle θ₁₀, .., θ₁₂.

Generally, said parameter which characterizes said vertical angle may e.g. be estimated and/or approximated, e.g. by determining a relative distance between the base station 100 and the specific terminal 10 (using signal strength measurements, delay measurements, and the like). Destination of arrival estimation techniques may also be employed.

After the sorting step, the assignment of the secondary radio resource is performed.

According to a further preferred embodiment, said step 210 of assigning said secondary radio resource is performed according to a predetermined scheme, particularly independent of feedback information that characterizes an actual quality of transmission between the base station 100 and individual terminals 10, 11, 12. Thus, the embodiments represent a very simple, decentralized measure to distribute secondary radio resources to different terminals 10, 11, 12 in the sense of decreasing an overall interference between neighbouring cells.

It is particularly advantageous, if neighboring base stations employ different variants of the scheme according to the embodiments so as e.g. not to assign the same secondary radio resources (e.g., frequency bands) to those of their terminals which are in a cell border region, i.e. close to the neighboring base station. This may e.g. be ensured when deploying the base stations by providing different "start values" to the inventive radio resource assignment scheme such that neighboring base stations do not employ identical variants of the scheme.

For example, considering that the base station 100 (Fig. 1) is co-located with two further base stations (not shown), each one of the three neighboring radio cells 110, 120, 130 is served by one of said base stations. If all three base stations adhere to the method according to the embodiments, they can assign secondary radio resources to their terminals according to respective vertical angles associate with the terminals. Generally, this assigning step will be performed individually by each base station, i.e. separately and independently for each cell. However, to further reduce interference, according to an embodiment, each of the three considered base stations applies a slightly different variant of the inventive assigning scheme.

For instance, the first base station 100 employs the table depicted by Fig. 5a to assign specific resource blocks (i.e., frequency subchannels of the LTE system) as a secondary resource to its terminals 10, 11, 12. From the table of Fig. 5a it can be gathered that terminals with a vertical angle θ ranging from a value θ₀ to a value θ₁ are assigned the resource blocks RB0 to RB16 (assuming a 10 MHz bandwidth LTE system which thus comprises a an overall range of resource blocks from RB0 to RB50). Terminals with a vertical angle θ ranging from a value θ₁ to a value θ₂ are assigned the resource blocks RB17 to RB32. Terminals with a vertical angle 9 ranging from a value θ₂ to a value θ₃ are assigned the resource blocks RB33 to RB50.

For instance, the first terminal 10 is assigned the secondary resources RB0..RB16, the second terminal 11 is assigned the secondary resources RB17..RB32, and the third terminal 12 is assigned the secondary resources RB33..RB50 within the radio cell 110 of the first base station 100.

The second base station (not shown), which provides the neighboring radio cell 120 for the terminals 20, 21, 22, however, uses a slightly different variant of the assignment scheme, namely the table according to Fig. 5b instead of Fig. 5a. As can be seen, the second table of Fig. 5b is a shifted variant of the table of Fig. 5a, with respect to the resource blocks, since it starts with RB17 to RB32 for the smallest vertical angle.

Thus, in the second radio cell 120, the first terminal 20 is assigned the secondary resources RB17..RB32, the second terminal 21 is assigned the secondary resources RB33..RB50, and the third terminal 22 is assigned the secondary resources RB0..RB16 by its base station (not shown).

Likewise, the third base station (not shown), which is also co-located with the first base station 100, will assign frequency resources according to the table depicted by Fig. 5c to its terminals 30, 31, 32. Thus, it is advantageously ensured that inter-cell interference is reduced.

In effect, because the vertical angle usually correlates with a distance of a terminal to its base station, the above explained assignment schemes ensure that a distance-dependent distribution / assignment of secondary radio resources is performed within a cell. By employing permutations of said assignment schemes as exemplified by Fig. 5a to 5c between neighboring base stations, it is possible to reduce interference without requiring communication of said base stations related to resource assignment.

The resource assignment according to the embodiments may rather be performed individually by each base station 100, independent of other base station. To ensure that neighboring base stations each start with different secondary resources values for the assignment, e.g. an offset within a respective table (Fig. 5a) may be employed which depends on an identifier of the specific base station 100.

According to a particularly preferred embodiment, said primary radio resource is time, preferably transmission time slots, and said secondary radio resource is frequency, preferably frequency subchannels, as already explained above. For instance, cellular communications networks according to the LTE standard provide using transmission time slots and frequency subchannels as primary and secondary radio resources. However, the present embodiments are not limited to this particular combination of radio resources. For instance, besides allocating frequency resources (such as e.g. frequency subchannels) to users/terminals that are served during the same time slot as described above, the principle according to the embodiments can generally also be applied by allocating different time resources (i.e., time slots) to users/terminals that are served on the same frequency resource (i.e., in this case, frequency is considered as the primary radio resource).

Apart from time and frequency, preferably orthogonal, codes may also be considered as radio resource in the sense of the present invention. Thus, a first radio resource may be frequency, and a second radio resource may be a specific code, and the like. In this case, the radio resource "code" is assigned to the various terminals served on the same frequency resources depending on the vertical angle.

The above described examples comprise a particularly simple assignment rule for assignment of secondary radio resources to the terminals. However, more complex assignment schemes may also be applied.

The embodiments explained above are not limited to base stations 100 of cellular communications networks. The inventive principle may rather be applied to any base station serving a plurality of terminals and employing primary and secondary radio resources. Typically, the principle may be applied with GSM-, UMTS-, LTE-, and WiMAX-base stations.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

The functions of the various elements shown in the Figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. Method of operating a base station (100) for a cellular communications network, said method comprising:
- the base station (100) determining (200) at least two terminals (10, 11, 12) which are served by the base station (100) and which are scheduled for the same primary radio resource,
- the base station (100) assigning (210) individual portions of a secondary radio resource, said secondary radio resource being frequency subchannels and being different from said primary radio resource, to said at least two terminals (10, 11, 12) depending on a parameter which characterizes a vertical angle (θ₁₂) between a virtual horizontal plane (P) associated with said base station (100) and a specific one of said terminals (10, 11, 12),
wherein said base station (100) assigns a first number of, preferably adjacent, frequency subchannels (Ci) to a first one of said at least two terminals (10, 11, 12), and wherein said base station (100) assigns a second number of, preferably adjacent, frequency subchannels (Cj) to a second one of said at least two terminals (10, 11, 12).

2. Method according to claim 1, wherein said base station comprises an antenna (102) a tilt angle of which can be controlled, and wherein said base station (100) uses individual tilt angles for single terminals (10, 11, 12) and/or groups of terminals depending on said parameter which characterizes said vertical angle (θ₁₀, ... θ₁₂).

3. Method according to one of the preceding claims, wherein said primary radio resource is time, preferably transmission time slots.

4. Method according to one of the preceding claims, wherein said base station (100) sorts said at least two terminals (10, 11, 12) depending on said parameter which characterizes said vertical angle (θ₁₂) associated with said terminals (10, 11, 12) to obtain a sorted list of terminals (10, 11, 12), and wherein said base station (100) assigns said portions of said secondary radio resource depending on said sorted list of terminals (10, 11, 12).

5. Method according to one of the preceding claims, wherein said step of assigning (210) said secondary radio resource is performed according to a predetermined scheme, particularly independent of feedback information that characterizes an actual quality of transmission between the base station (100) and individual terminals (10, 11, 12).

6. Method according to claim 5, wherein said predetermined scheme associates values and/or value ranges of said parameter which characterizes a vertical angle (θ₁₂) with respective portions of said secondary radio resources.

7. Base station (100) for a cellular communications network, said base station (100) being configured to:
- determine (200) at least two terminals (10, 11, 12) which are served by the base station (100) and which are scheduled for the same primary radio resource, and to
- assign (210) individual portions of a secondary radio resource, said secondary radio resource being frequency subchannels and being different from said primary radio resource, to said at least two terminals (10, 11, 12) depending on a parameter which characterizes a vertical angle (θ₁₂) between a virtual horizontal plane (P) associated with said base station (100) and a specific one of said terminals (10, 11, 12),
wherein said base station (100) is configured to assign a first number of, preferably adjacent, frequency subchannels (Ci) to a first one of said at least two terminals (10, 11, 12), and to assign a second number of, preferably adjacent, frequency subchannels (Cj) to a second one of said at least two terminals (10, 11, 12).

8. Base station (100) according to claim 7, wherein said base station comprises an antenna (102) a tilt angle of which can be controlled, and wherein said base station (100) is configured to use individual tilt angles for single terminals (10, 11, 12) and/or groups of terminals depending on said parameter which characterizes said vertical angle (θ₁₂).

9. Base station (100) according to one of the claims 7 to 8, wherein said primary radio resource is time, preferably transmission time slots.

10. Base station (100) according to one of the claims 7 to 9, wherein said base station (100) is configured to sort said at least two terminals (10, 11, 12) depending on said parameter which characterizes said vertical angle (θ₁₂) associated with said terminals (10, 11, 12) to obtain a sorted list of terminals (10, 11, 12), and to assign said portions of said secondary radio resource depending on said sorted list of terminals (10, 11, 12).

11. Base station (100) according to one of the claims 7 to 10, wherein said base station (100) is configured to perform said step of assigning (210) said secondary radio resource according to a predetermined scheme, particularly independent of feedback information that characterizes an actual quality of transmission between the base station (100) and individual terminals (10, 11, 12).

12. Base station (100) according to claim 11, wherein said predetermined scheme associates values and/or value ranges of said parameter which characterizes a vertical angle (θ₁₂) with respective portions of said secondary radio resources.

13. Base station (100) according to claim 11, wherein said base station is configured to perform said step of assigning (210) said secondary radio resource according to a different variant of said predetermined scheme as compared to a further base station.

14. Base station (100) according to claim 11, wherein said base station is configured to use a table for implementing said predetermined scheme and to employ an offset within said table which depends on an identifier of said base station (100).

## Patentansprüche

1. Verfahren zum Betreiben einer Basisstation (100) für ein zellulares Kommunikationsnetzwerk, wobei das besagte Verfahren umfasst:
- Ermitteln (200), durch die Basisstation (100), von mindestens zwei Endgeräten (10, 11, 12), welche von der Basisstation (100) bedient werden und für dieselbe primäre Funkressource geplant sind,
- Zuweisen (210), durch die Basisstation (100), von individuellen Teilen einer sekundären Funkressource, wobei es sich bei der besagten sekundären Funkressource um Frequenz-Subkanäle handelt und die besagte sekundäre Funkressource sich von der besagten primären Funkressource unterscheidet, an die besagten mindestens zwei Endgeräte (10, 11, 12) in Abhängigkeit von einem Parameter, welcher einen vertikalen Winkel (θ₁₂) zwischen einer mit der besagten Basisstation (100) assoziierten virtuellen horizontalen Ebene (P) und einem spezifischen der besagten Endgeräte (10,11, 12) kennzeichnet,
wobei die besagte Basisstation (100) einem ersten der besagten mindestens zwei Endgeräte (10, 11, 12) eine erste Anzahl von, vorzugsweise benachbarten, Frequenz-Subkanälen (Ci) zuweist, und wobei die besagte Basisstation (100) einem zweiten der besagten mindestens zwei Endgeräte (10, 11, 12) eine zweite Anzahl von, vorzugsweise benachbarten, Frequenz-Subkanälen (Cj) zuweist.

2. Verfahren nach Anspruch 1, wobei die besagte Basisstation eine Antenne (102) umfasst, deren Kippwinkel gesteuert werden kann, und wobei die besagte Basisstation (100) in Abhängigkeit von dem besagten Parameter, welcher den besagten vertikalen Winkel (θ₁₀, ..., θ₁₂) kennzeichnet, individuelle Kippwinkel für einzelne Endgeräte (10, 11, 12) und/oder Gruppen von Endgeräten verwendet.

3. Verfahren nach einem der vorstehenden Ansprüche, wobei es sich bei der besagten primären Funkressource um Zeitschlitze, vorzugsweise um Übertragungszeitschlitze, handelt.

4. Verfahren nach einem der vorstehenden Ansprüche, wobei die besagte Basisstation (100) die besagten mindestens zwei Endgeräte (10, 11, 12) in Abhängigkeit von dem besagten Parameter, welcher den mit den besagten Endgeräten (10, 11, 12) assoziierten vertikalen Winkel (θ₁₂) kennzeichnet, sortiert, um eine sortierte Liste von Endgeräten (10, 11, 12) zu erhalten, und wobei die besagte Basisstation (100) die besagten Teile der besagten sekundären Funkressource in Abhängigkeit von der besagten sortierten Liste von Endgeräten (10, 11, 12) zuweist.

5. Verfahren nach einem der vorstehenden Ansprüche, wobei der besagte Schritt des Zuweisens (210) der besagten zweiten Funkressource gemäß einem vorbestimmten Schema, insbesondere unabhängig von Rückkopplungsinformationen, welche eine aktuelle Übertragungsqualität zwischen der Basisstation (100) und individuellen Endgeräten (10, 11, 12) kennzeichnen, durchgeführt wird.

6. Verfahren nach Anspruch 5, wobei das besagte vorbestimmte Schema Werte und/oder Wertbereiche des besagten Parameters, welcher einen vertikalen Winkel (θ₁₂) kennzeichnet, mit jeweiligen Teilen der besagten zweiten Funkressourcen assoziiert.

7. Basisstation (100) für ein zellulares Kommunikationsnetzwerk, wobei die besagte Basisstation (100) für Folgendes konfiguriert ist:
- Ermitteln (200) von mindestens zwei Endgeräten (10, 11, 12), welche von der Basisstation (100) bedient werden und für dieselbe primäre Funkressource geplant sind,
- Zuweisen (210) von individuellen Teilen einer sekundären Funkressource, wobei es sich bei der besagten sekundären Funkressource um Frequenz-Subkanäle handelt und die besagte sekundäre Funkressource sich von der besagten primären Funkressource unterscheidet, an die besagten mindestens zwei Endgeräte (10, 11, 12) in Abhängigkeit von einem Parameter, welcher einen vertikalen Winkel (θ₁₂) zwischen einer mit der besagten Basisstation (100) assoziierten virtuellen horizontalen Ebene (P) und einem spezifischen der besagten Endgeräte (10, 11, 12) kennzeichnet,
wobei die besagte Basisstation (100) für das Zuweisen einer ersten Anzahl von, vorzugsweise benachbarten, Frequenz-Subkanälen (Ci) an ein erstes der besagten mindestens zwei Endgeräte (10, 11, 12) und für das Zuweisen einer zweiten Anzahl von, vorzugsweise benachbarten, Frequenz-Subkanälen (Cj) an ein zweites der besagten mindestens zwei Endgeräte (10, 11, 12) konfiguriert ist.

8. Basisstation (100) nach Anspruch 7, wobei die besagte Basisstation eine Antenne (102) umfasst, deren Kippwinkel gesteuert werden kann, und wobei die besagte Basisstation (100) für die Verwendung von individuellen Kippwinkeln für einzelne Endgeräte (10, 11, 12) und/oder Gruppen von Endgeräten in Abhängigkeit von dem besagten Parameter, welcher den besagten vertikalen Winkel (θ₁₂) kennzeichnet, konfiguriert ist.

9. Basisstation (100) nach einem der Ansprüche 7 bis 8, wobei es sich bei der besagten primären Funkressource um Zeitschlitze, vorzugsweise um Übertragungszeitschlitze, handelt.

10. Basisstation (100) nach einem der Ansprüche 7 bis 9, wobei die besagte Basisstation (100) dafür konfiguriert ist, die besagten mindestens zwei Endgeräte (10, 11, 12) in Abhängigkeit von dem besagten Parameter, welcher den mit den besagten Endgeräten (10, 11, 12) assoziierten vertikalen Winkel (θ₁₂) kennzeichnet, zu sortieren, um eine sortierte Liste von Endgeräten (10, 11, 12) zu erhalten, und die besagten Teile der besagten sekundären Funkressource in Abhängigkeit von der besagten sortierten Liste von Endgeräten (10, 11, 12) zuzuweisen.

11. Basisstation (100) nach einem der Ansprüche 7 bis 10, wobei die besagte Basisstation (100) für das Durchführen des besagten Schritts des Zuweisens (210) der besagten zweiten Funkressource gemäß einem vorbestimmten Schema, insbesondere unabhängig von Rückkopplungsinformationen, welche eine aktuelle Übertragungsqualität zwischen der Basisstation (100) und individuellen Endgeräten (10, 11, 12) kennzeichnen, konfiguriert ist.

12. Basisstation (100) nach Anspruch 11, wobei das besagte vorbestimmte Schema Werte und/oder Wertbereiche des besagten Parameters, welcher einen vertikalen Winkel (θ₁₂) kennzeichnet, mit jeweiligen Teilen der besagten zweiten Funkressourcen assoziiert.

13. Basisstation (100) nach Anspruch 11, wobei die besagte Basisstation für das Durchführen des besagten Schritts des Zuweisens (210) der besagten zweiten Funkressource gemäß einer unterschiedlichen Variante des besagten vorbestimmten Schemas im Vergleich zu einer weiteren Basisstation konfiguriert ist.

14. Basisstation (100) nach Anspruch 11, wobei die besagte Basisstation für das Verwenden einer Tabelle zur Implementierung des besagten vorbestimmten Schemas und für das Anwenden eines Versatzes innerhalb der besagten Tabelle, welcher von einer Kennung der besagten Basisstation (100) abhängt, konfiguriert ist.

## Revendications

1. Procédé de fonctionnement d'une station de base (100) pour un réseau de communication cellulaire, ledit procédé comprenant les étapes suivantes :
- la station de base (100) détermine (200) au moins deux terminaux (10, 11, 12) qui sont desservis par la station de base (100) et qui sont planifiés pour la même ressource radio primaire,
- la station de base (100) attribue (210) des parties individuelles d'une ressource radio secondaire, ladite ressource radio secondaire étant des sous-canaux de fréquences et étant différente de ladite ressource radio primaire, auxdits au moins deux terminaux (10, 11, 12) selon un paramètre qui caractérise un angle vertical (θ₁₂) entre un plan horizontal virtuel (P) associé à ladite station de base (100) et un terminal spécifique parmi lesdits terminaux (10, 11, 12),
dans lequel ladite station de base (100) attribue un premier nombre de sous-canaux de fréquences (Ci), de préférence adjacents, à un premier terminal parmi lesdits au moins deux terminaux (10, 11, 12), et dans lequel ladite station de base (100) attribue un deuxième nombre de sous-canaux de fréquences (Cj), de préférence adjacents, à un deuxième terminal parmi lesdits au moins deux terminaux (10, 11, 12).

2. Procédé selon la revendication 1, dans lequel ladite station de base comprend une antenne (102), dont un angle d'inclinaison peut être régulé, et dans lequel ladite station de base (100) utilise des angles d'inclinaison individuels pour des terminaux individuels (10, 11, 12) et/ou des groupes de terminaux selon ledit paramètre qui caractérise ledit angle vertical (θ₁₀, .., θ₁₂).

3. Procédé selon l'une des revendications précédentes, dans lequel ladite ressource radio primaire est le temps, de préférence des créneaux temporels de transmission.

4. Procédé selon l'une des revendications précédentes, dans lequel la station de base (100) trie lesdits au moins deux terminaux (10, 11, 12) selon ledit paramètre qui caractérise ledit angle vertical (θ₁₂) associé auxdits terminaux (10, 11, 12) pour obtenir une liste de terminaux triée (10, 11, 12), et dans lequel ladite station de base (100) attribue lesdites parties de ladite ressource radio secondaire selon ladite liste de terminaux triée (10, 11, 12).

5. Procédé selon l'une des revendications précédentes, dans lequel ladite étape d'attribution (210) de ladite ressource radio secondaire est exécutée conformément à un schéma prédéterminé, particulièrement indépendant d'informations de rétroaction qui caractérisent une qualité de transmission réelle entre la station de base (100) et des terminaux individuels (10, 11, 12).

6. Procédé selon la revendication 5, dans lequel ledit schéma prédéterminé associe des valeurs et/ou des plages de valeurs dudit paramètre qui caractérise un angle vertical (θ₁₂) à des parties respectives desdites ressources radio secondaires.

7. Station de base (100) pour un réseau de communication cellulaire, ladite station de base (100) étant configurée pour :
- déterminer (200) au moins deux terminaux (10, 11, 12) qui sont desservis par la station de base (100) et qui sont planifiés pour la même ressource radio primaire, et pour
- attribuer (210) des parties individuelles d'une ressource radio secondaire, ladite ressource radio secondaire étant des sous-canaux de fréquences et étant différente de ladite ressource radio primaire, auxdits au moins deux terminaux (10, 11, 12) selon un paramètre qui caractérise un angle vertical (θ₁₂) entre un plan horizontal virtuel (P) associé à ladite station de base (100) et un terminal spécifique parmi lesdits terminaux (10, 11, 12),
ladite station de base (100) étant configurée pour attribuer un premier nombre de sous-canaux de fréquences (Ci), de préférence adjacents, à un premier terminal parmi lesdits au moins deux terminaux (10, 11, 12), et pour attribuer un deuxième nombre de sous-canaux de fréquences (Cj), de préférence adjacents, à un deuxième terminal parmi lesdits au moins deux terminaux (10, 11, 12).

8. Station de base (100) selon la revendication 7, ladite station de base comprenant une antenne (102), dont un angle d'inclinaison peut être régulé, et ladite station de base (100) étant configurée pour utiliser des angles d'inclinaison individuels pour des terminaux uniques (10, 11, 12) et/ou des groupes de terminaux selon ledit paramètre qui caractérise ledit angle vertical (θ₁₂).

9. Station de base (100) selon l'une des revendications 7 et 8, dans laquelle ladite ressource radio primaire est le temps, de préférence des créneaux temporels de transmission.

10. Station de base (100) selon l'une des revendications 7 à 9, ladite station de base (100) étant configurée pour trier lesdits au moins deux terminaux (10, 11, 12) selon ledit paramètre qui caractérise ledit angle vertical (θ₁₂) associé auxdits terminaux (10, 11, 12) pour obtenir une liste de terminaux triée (10, 11, 12), et pour attribuer lesdites parties de ladite ressource radio secondaire selon ladite liste de terminaux triée (10, 11, 12).

11. Station de base (100) selon l'une des revendications 7 à 10, ladite station de base (100) étant configurée pour exécuter ladite étape d'attribution (210) de ladite ressource radio secondaire conformément à un schéma prédéterminé, particulièrement indépendant d'informations de rétroaction qui caractérisent une qualité de transmission réelle entre la station de base (100) et des terminaux individuels (10, 11, 12).

12. Station de base (100) selon la revendication 11, dans laquelle ledit schéma prédéterminé associe des valeurs et/ou des plages de valeurs dudit paramètre qui caractérise un angle vertical (θ₁₂) à des parties respectives desdites ressources radio secondaires.

13. Station de base (100) selon la revendication 11, ladite station de base étant configurée pour exécuter ladite étape d'attribution (210) de ladite ressource radio secondaire conformément à une variante différente dudit schéma prédéterminé par rapport à une autre station de base.

14. Station de base (100) selon la revendication 11, ladite station de base étant configurée pour utiliser une table pour mettre en oeuvre ledit schéma prédéterminé et pour utiliser un décalage dans ladite table qui dépend d'un identifiant de ladite station de base (100).
